# EUROPEAN PATENT APPLICATION

(11) **EP 4 621 347 A1**
(43) Date of publication of application: **24.09.2025**
(21) Application number: 23891434.5
(22) Date of filing: 08.11.2023
(51) Int. Cl.: G01B 7/00, G01B 21/00

(54) **WEAR INSPECTION DEVICE, AND SHIP**

(30) Priority: 14.11.2022 JP 2022181600
(71) Applicant: Japan Marine United Corporation, Yokohama-City, Kanagawa 220-0012 (JP)
(72) Inventor: SHIMIZU, Masahiro, Yokohama-City, Kanagawa 220-0012 (JP); NAKAIE, Masashi, Yokohama-City, Kanagawa 220-0012 (JP); NISHIYAMA, Saiki, Yokohama-City, Kanagawa 220-0012 (JP)
(74) Representative: Grünecker Patent- und Rechtsanwälte PartG mbB
(86) International application number: PCT/JP2023/040166
(87) International publication number: WO 2024/106282

(57) **Abstract**

A wear inspection device (20) is provided in a ship including a propulsion propeller, a power transmission unit (13a, 13b) configured to transmit a rotational driving force to the propulsion propeller, and a journal bearing (5p to 5s) configured to rotatably support the power transmission unit (13a, 13b). The wear inspection device (20) is a device for performing inspection concerning wear of the journal bearing (5p to 5s). The wear inspection device (20) includes a casing (4) that surrounds the power transmission unit (13a, 13b) and is provided with the journal bearing (5p to 5s), and a distance sensor (21p to 21s) that is attached to the casing (4) and configured to measure, in a non-contact manner, a distance as a target distance from a reference point to an outer peripheral surface of the power transmission unit (13a, 13b) in a radial direction of the power transmission unit (13a, 13b).

## Description

### Technical Field

The present invention relates to a technique for performing an inspection concerning wear of a journal bearing in a ship including a propulsion propeller, a power transmission unit that transmits a rotational driving force to the propulsion propeller, and the journal bearing that rotatably supports the power transmission unit.

### Background Art

In the ship, a power transmission unit (e.g., a propeller shaft) that transmits the rotational driving force to a propulsion propeller is rotatably supported by a journal bearing. Conventionally, the wear of the journal bearing is inspected.

Patent Literature 1 discloses a technique for measuring, with a wear down gauge, a wear amount of a stem tube bearing (journal bearing). In Patent Literature 1, the wear amount is measured as follows. The wear down gauge is attached to an attachment hole provided in a casing of the stem tube. Then, a gauge rod of the wear down gauge is moved toward an outer peripheral surface of a propeller drive shaft and is brought into contact with the outer peripheral surface. The wear amount of the stem tube bearing is obtained from an amount of movement of the gauge rod at this time.

### Citation List

### Patent Literatures

Patent Literature 1: Japanese Patent Application Laid-Open No. H11-83409
Patent Literature 2: Japanese Patent Application Laid-Open No. 2009-161116

### Summary of Invention

### Technical Problem

However, as described above, in a case where the wear amount of the journal bearing is measured by using the wear down gauge, a measurement work is required. In other words, it is necessary to attach the wear down gauge to the attachment hole of the casing at the time of measurement and further move the gauge rod of the wear down gauge toward the outer peripheral surface of the propeller drive shaft.

Therefore, an object of the present invention is to enable inspection concerning wear of a journal bearing that supports a power transmission unit for a propulsion propeller of a ship without performing work of moving a gauge rod of a wear down gauge.

### Solution to Problem

According to an aspect of the present invention, there is provided a wear inspection device that is provided in a ship including a propulsion propeller, a power transmission unit configured to transmit a rotational driving force to the propulsion propeller, and a journal bearing configured to rotatably support the power transmission unit, the wear inspection device being for performing inspection concerning wear of the journal bearing, the wear inspection device including:
a casing that surrounds the power transmission unit and is provided with the journal bearing; and
a distance sensor that is attached to the casing and configured to measure, in a non-contact manner, a distance as a target distance from a reference point to an outer peripheral surface of the power transmission unit in a radial direction of the power transmission unit.

In addition, according to the present invention, there is provided a ship including the above-described wear inspection device.

### Effect of the Invention

According to the present invention, a distance sensor is attached to a casing that surrounds a power transmission unit for a propulsion propeller of a ship and is provided with a journal bearing, and a distance to an outer peripheral surface of the power transmission unit is measured by the distance sensor. Therefore, the wear amount of the journal bearing can be confirmed from this measurement value. In addition, since this measurement is performed on the power transmission unit in a non-contact manner by the distance sensor, it is not necessary to perform work or an operation of moving the gauge rod of the wear down gauge and bringing a tip end of the gauge rod into contact with the outer peripheral surface of the power transmission unit as in the related art.

### Brief Description of Drawings

FIG. 1 is a schematic configuration diagram illustrating a propeller device provided in a ship.
FIG. 2 is a sectional view taken along line **II-II** in FIG. 1.
FIG. 3 is a block diagram illustrating a configuration of a wear inspection device according to an embodiment of the present invention.
FIG. 4 is a block diagram illustrating a configuration example of a wear inspection device according to Modification Example 1.
FIG. 5 is a block diagram illustrating a configuration example of a wear inspection device according to Modification Example 3.
FIG. 6 is a block diagram illustrating a configuration example of a wear inspection device according to Modification Example 4.
FIG. 7 is a block diagram illustrating a configuration example of a wear inspection device according to Modification Example 9.

### Description of Embodiments

A preferred embodiment of the present invention will be described with reference to the drawings. Note that the same reference numeral will be given to the same portion in each drawing, and redundant description thereof will be omitted.

A wear inspection device according to the embodiment of the present invention is a device for performing an inspection concerning wear of a journal bearing that rotatably supports a power transmission unit. The power transmission unit transmits a rotational driving force to a propulsion propeller of a ship. The wear inspection device according to the present embodiment is provided in a propeller device of the ship. The propeller device includes a propulsion propeller of the ship and drives the propeller to rotate.

### (Configuration Example of Propeller Device)

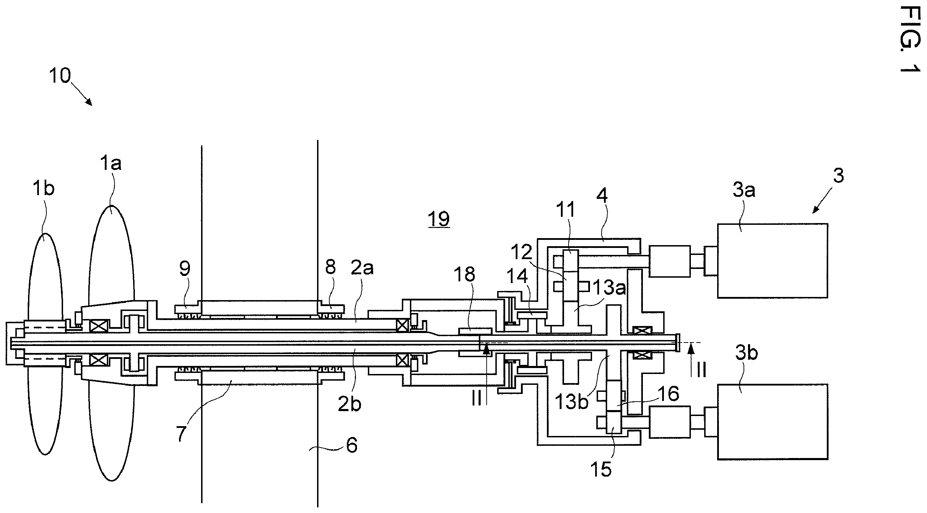

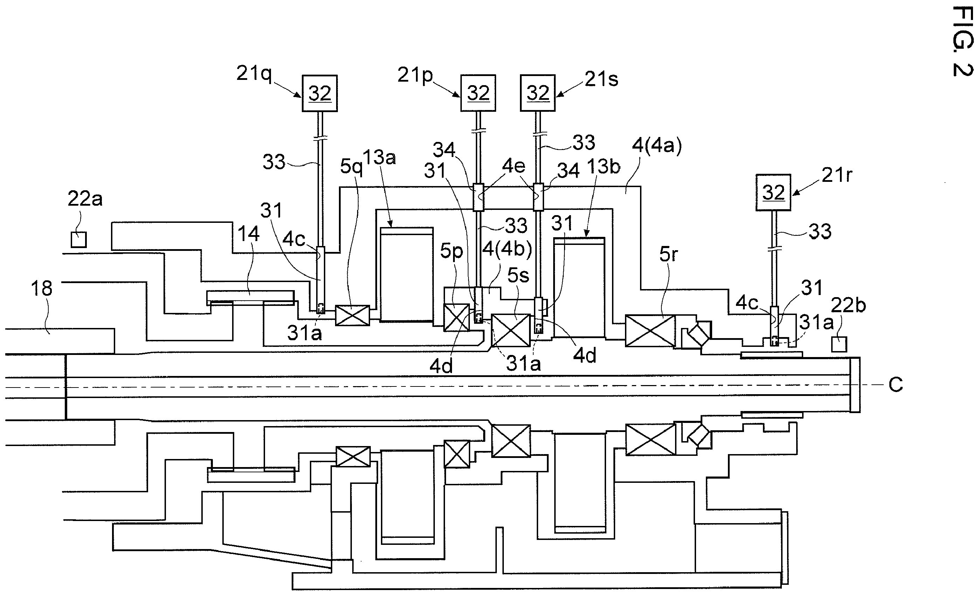

FIG. 1 is a schematic configuration diagram illustrating the propeller device 10 provided in the ship. FIG. 2 is a sectional view taken along line II-II in FIG. 1.

As illustrated in FIG. 1 and FIG. 2, the propeller device 10 may be a contra-rotating propeller device including a front propeller 1a (a stem side) and a rear propeller 1b (a stern side) as propulsion propellers, and rotating the propellers 1a and 1b in opposite directions. The contra-rotating propeller device 10 further includes an outer shaft 2a, an inner shaft 2b, a drive device 3, a casing 4, and journal bearings 5p, 5q, 5r, and 5s.

The outer shaft 2a has an inner space. The inner space passes through the outer shaft 2a in an axial direction thereof. The front propeller 1a is coupled to an end portion of the outer shaft 2a on a stern side.

The inner shaft 2b is disposed coaxially with the outer shaft 2a to pass through the inner space of the outer shaft 2a. The rear propeller 1b is coupled to an end portion of the inner shaft 2b on the stern side.

The outer shaft 2a and the inner shaft 2b extend from an engine room 19 inside a hull 6 to the outside of the hull 6 on the stern side through a stern tube 7 provided at the hull 6.

The drive device 3 rotates the outer shaft 2a and the inner shaft 2b in opposite directions. In the example in FIG. 1, the drive device 3 includes a first drive source 3a that rotates the outer shaft 2a via gears 11 and 12, an outer shaft output gear 13a, and a gear coupling 14, and a second drive source 3b that rotates the inner shaft 2b via gears 15 and 16 and an inner shaft output gear 13b. The inner shaft output gear 13b is coupled to the inner shaft 2b via a sleeve-shaft joint 18.

The casing 4 surrounds the power transmission units (the outer shaft output gear 13a and the inner shaft output gear 13b in the example in FIG. 2) that transmit a rotational driving force to the propeller. Note that in FIG. 2, the casing 4 includes a portion surrounding the outer shaft output gear 13a and a portion surrounding the inner shaft output gear 13b. The casing 4, the drive device 3, the gears 11, 12, 15, and 16, the outer shaft output gear 13a, the inner shaft output gear 13b, and the gear coupling 14 are disposed in the engine room 19 of the ship.

As illustrated in FIG. 2, the journal bearings 5p to 5s are provided in the casing 4 and rotatably support the power transmission units (the outer shaft output gear 13a and the inner shaft output gear 13b in the example in FIG. 2) described above. In the example in FIG. 2, the journal bearings 5p and 5q rotatably support the outer shaft output gear 13a as the power transmission unit that transmits the rotational driving force to the front propeller 1a, and the journal bearings 5r and 5s rotatably support the inner shaft output gear 13b as the power transmission unit that transmits the rotational driving force to the rear propeller 1b.

In the example in FIG. 2, the casing 4 includes an outer casing portion 4a to which the journal bearings 5q and 5r are attached and an inner casing portion 4b that is positioned inside the outer casing portion 4a and to which the journal bearings 5p and 5s are attached. Lubricating oil is supplied to the journal bearings 5p to 5s. Therefore, the lubricating oil is present inside the casing 4 (inside the outer casing portion 4a and inside the inner casing portion 4b in the example in FIG. 2).

Note that the contra-rotating propeller device 10 is described in, for example, Patent Literature 2, and thus, a more detailed description thereof will be omitted here.

### (Configuration of Wear Inspection Device)

As illustrated in FIG. 2, a wear inspection device 20 according to the present embodiment includes distance sensors 21p to 21s attached to the casing 4 described above. Note that the casing 4 may be a constituent element of the wear inspection device 20. Each of the distance sensors 21p to 21s measures, in a non-contact manner, a distance from a reference point in a radial direction of the power transmission unit (the outer shaft output gear 13a or the inner shaft output gear 13b) to an outer peripheral surface of the power transmission unit. Note that the radial direction may be a direction orthogonal to a rotation axis C of the power transmission units 13a and 13b. The rotation axis C may be directed in the horizontal direction or a direction somewhat inclined from the horizontal direction.

Each of the distance sensors 21p to 21s may measure, in a non-contact manner, a distance from a reference point on an upward side to the outer peripheral surface of the power transmission unit 13a or 13b on a downward side in the radial direction that is among the radial directions of the power transmission units 13a and 13b and that is parallel to the vertical direction (or that is a direction inclined from the vertical direction).

In the example in FIG. 2, the distance sensors 21p and 21q each measure, in a non-contact manner, a distance (hereinafter, also referred to as a target distance concerning the power transmission unit 13a) from the reference point in the radial direction of the outer shaft output gear 13a as the power transmission unit to the outer peripheral surface of the outer shaft output gear 13a. The outer peripheral surface may be an outer peripheral surface that is included in the outer shaft output gear 13a. and on which teeth meshing with the gear 12 are not formed.

The distance sensors 21r and 21s each measure, in a non-contact manner, a distance (hereinafter, also referred to as a target distance concerning the power transmission unit 13b) from the reference point in the radial direction of the inner shaft output gear 13b as the power transmission unit to the outer peripheral surface of the inner shaft output gear 13b. The outer peripheral surface may be an outer peripheral surface included in the inner shaft output gear 13b and on which teeth meshing with the gear 16 are not formed.

Each of the distance sensors 21p to 21s may be, for example, an eddy current type displacement sensor. In this case, the outer peripheral surfaces of the power transmission units 13a and 13b are formed of a material (e.g., metal) in which an eddy current is generated by a magnetic field generated by a coil 31a, which will be described later, of the eddy current type displacement sensor. Each of the distance sensors 21p to 21s as the eddy current type displacement sensor includes a sensor head 31, a measurement unit 32, and an electric wire 33 (e.g., a cable).

The sensor head 31 is attached to the casing 4 to face the outer peripheral surface of the corresponding power transmission unit 13a or 13b in the radial direction of the power transmission units 13a and 13b. A distal end of the sensor head 31 may be disposed close to the outer peripheral surfaces of the power transmission unit 13a or 13b. Lubricating oil for the journal bearings 5p, 5q, 5r, and 5s is present between the sensor head 31 and the outer peripheral surfaces of the power transmission units 13a and 13b inside the casing 4. The sensor head 31 is provided with the coil 31a. The coil 31a may be provided at the distal end portion of the sensor head 31 on a side where the power transmission unit 13a or 13b is provided.

The measurement unit 32 supplies an alternating current to the coil 31a via the electric wire 33. The coil 31a generates an AC magnetic field by the supplied alternating current. As a result, an eddy current depending on the distance from the sensor head 31 (coil 31a) to the outer peripheral surface of the power transmission unit 13a or 13b is generated in the power transmission unit 13a or 13b. Impedance (or a voltage) of the coil 31a varies depending on the magnitude of the eddy current. The measurement unit 32 measures the target distance concerning the power transmission unit 13a or 13b, based on the impedance (or the voltage) of the coil 31a. Here, the target distance may be a distance from the distal end of the sensor head 31 to the outer peripheral surface of the power transmission unit 13a or 13b. Here, the distal end of the sensor head 31 is the reference point.

The distance sensors 21q and 21r and the casing 4 are configured such that the distance sensors 21q and 21r are attachable to and detachable from the casing 4 (outer casing portion 4a). For example, as illustrated in FIG. 2, a male screw is formed on the outer peripheral surface of the sensor head 31 of each of the distance sensors 21q and 21r, and a through-hole 4c that passes through the outer casing portion 4a in the radial direction of the power transmission unit 13a or 13b is formed in the outer casing portion 4a. A female screw is formed on an inner peripheral surface of the through-hole 4c. The distance sensors 21q and 21r may be removably attached to the casing 4 by screwing the male screw on the outer peripheral surface of the sensor head 31 of each of the distance sensors 21q and 21r into the female screw of the corresponding through-hole 4c. With such a configuration, the distance sensors 21q and 21r are attachable to and detachable from the casing 4.

The sensor head 31 of each of the distance sensors 21p and 21s is provided at the inner casing portion 4b. The journal bearings 5p and 5s and the sensor heads 31 of the distance sensors 21p and 21s are attached to the inner casing portion 4b. Through-holes 4d that pass through the inner casing portion 4b in the radial direction of the inner shaft output gear 13b are formed in the inner casing portion 4b.

A tube-shaped member 34 is attached to the outer casing portion 4a for the distance sensors 21p and 21s. The tube-shaped member 34 is disposed in a through-hole 4e of the outer casing portion 4a. The through-hole 4e passes through the outer casing portion 4a in the radial direction of the power transmission units 13a and 13b. The electric wire 33 from the sensor head 31 of each of the distance sensors 21p and 21s extends through the inside of the tube-shaped member 34 to the measurement unit 32 at the outside of the outer casing portion 4a. The tube-shaped member 34 prevents the electric wire 33 from coming into contact with the casing 4. **In** addition, the electric wire 33 can be fixed to the tube-shaped member 34.

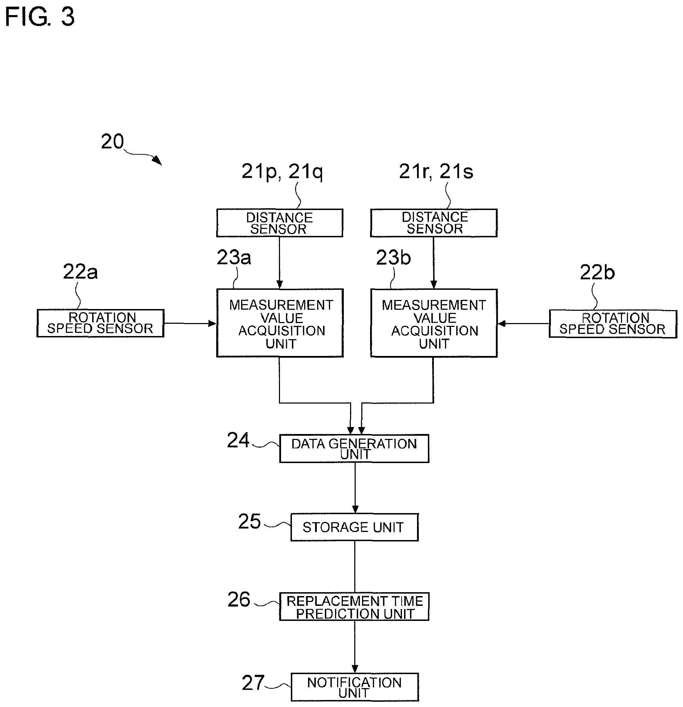

FIG. 3 is a block diagram illustrating a configuration example of the wear inspection device 20 according to the present embodiment. As illustrated in FIG. 3, the wear inspection device 20 may include rotation speed sensors 22a and 22b, measurement value acquisition units 23a and 23b, a data generation unit 24, a storage unit 25, a replacement time prediction unit 26, and a notification unit 27.

The rotation speed sensors 22a and 22b detect rotation speeds (e.g., the number of revolutions per unit time) of the power transmission units 13a and 13b. **In** the examples in FIG. 2 and FIG. 3, the rotation speed sensor 22a detects the rotation speed of the power transmission unit (the outer shaft output gear 13a) that transmits the rotational driving force to the front propeller 1a, and the rotation speed sensor 22b detects the rotation speed of the power transmission unit (the inner shaft output gear 13b) that transmits the rotational driving force to the rear propeller 1b. Note that since known sensors (e.g., optical sensors) can be used as the rotation speed sensors 22a and 22b, detailed description thereof will be omitted.

The measurement value acquisition unit 23a outputs, as a measurement value for evaluation, the target distance concerning the power transmission unit 13a, which is measured by each of the distance sensors 21p and 21q in a state (hereinafter, also simply referred to as a target state) in which the rotation speed (detected rotation speed) detected by the rotation speed sensor 22a is a set speed for measurement. Similarly, the measurement value acquisition unit 23b outputs, as a measurement value for evaluation, the target distance concerning the power transmission unit 13b, which is measured by each of the distance sensors 21r and 21s in a state (hereinafter, also simply referred to as a target state) in which the rotation speed (detected rotation speed) detected by the rotation speed sensor 22b is a set speed for measurement. In the configuration example in FIG. 3, the measurement value acquisition units 23a and 23b output the above-described measurement value for evaluation to the data generation unit 24. The above-described target state means a case where a first condition that the detected rotation speed is the set speed is satisfied.

Note that the distance sensors 21p and 21q may be operated to measure the target distance concerning the power transmission unit 13a at each point of time and output the target distance to the measurement value acquisition unit 23a, and the measurement value acquisition unit 23a may extract and output the target distance output from each of the distance sensors 21p and 21q in the target state as the measurement value for evaluation. Similarly, the distance sensors 21r and 21s may be operated to measure the target distance related to the power transmission unit 13b at each point of time and output the target distance to the measurement value acquisition unit 23b, and the measurement value acquisition unit 23b may extract, as a measurement value for evaluation, the target distance output from each of the distance sensors 21r and 21s in the target state, and may output the extracted target distance.

Note that the processing (hereinafter, referred to as evaluation measurement value acquisition processing) of acquiring the measurement value for evaluation as described above may be started, for example, as follows. In a case where a measurement command is input to the measurement value acquisition units 23a and 23b by a person operating an appropriate operation unit, the measurement value acquisition units 23a and 23b may start the evaluation measurement value acquisition processing. The person may input such a measurement command to the measurement value acquisition units 23a and 23b repeatedly (e.g., periodically) at intervals.

Alternatively, the measurement value acquisition unit 23a may automatically start and execute the evaluation measurement value acquisition processing each time a set period (e.g., one day, one week, or one month) elapses. In this case, the measurement value acquisition units 23a and 23b may each have a timer for determining whether the set period has elapsed, or may be configured to receive information on the elapsed time from another device.

In a case where the evaluation measurement value acquisition processing is started, the measurement value acquisition units 23a and 23b may wait until the rotation speed detected by the corresponding rotation speed sensors 22a and 22b becomes the set speed for measurement, and may extract and output the target distances concerning the power transmission units 13a and 13b which are measured by the respective distance sensors 21p, 21q, 21r, and 21s as described above as the measurement values for evaluation when the rotation speed detected by the corresponding rotation speed sensors 22a and 22b becomes the set speed for measurement.

Each of the distance sensors 21p to 21s may operate at all times. Alternatively, the measurement value acquisition units 23a and 23b may activate the respective distance sensors 21p to 21s when the evaluation measurement value acquisition processing is started.

Each time the measurement value for evaluation is output from the measurement value acquisition unit 23a or 23b, the data generation unit 24 generates measurement data in which the measurement value for evaluation and a point of time (e.g., a date, or date and time) are associated with each other. Here, the point of time is a time point at which the measurement value for evaluation is output from the measurement value acquisition unit 23a or 23b.

The data generation unit 24 has a function of counting time (e.g., a date, or a date and time) or a function of receiving a current point of time (e.g., a date, or a date and time) from another device, and the data generation unit 24 may generate the above-described measurement data, based on such a point of time.

The measurement data generated by the data generation unit 24 are stored in the storage unit 25. In other words, the data generation unit 24 stores the measurement data in the storage unit 25 each time the measurement data are generated. The storage unit 25 may be a storage area in a storage device such as a memory or a hard disk.

Based on a plurality of pieces of measurement data corresponding to the distance sensor 21p, 21q, 21r, or 21s, which are stored in the storage unit 25, the replacement time prediction unit 26 predicts, for each of the distance sensors, a future replacement time of the journal bearings 5p, 5q, 5r, or 5s corresponding to the distance sensor. A plurality of pieces of the measurement data may be generated from a plurality of measurement values for evaluation output at respective different points of time by the corresponding distance sensor 21p, 21q, 21r, or 21s. In addition, the journal bearing 5p, 5q, 5r, or 5s corresponding to the distance sensor means the journal bearing in which a wear amount is represented by the measurement value for evaluation from the distance sensor (the same applies hereinafter). In this case, in an example, the journal bearing 5p, 5q, 5r, or 5s corresponding to the distance sensor may be the journal bearing that is among a plurality of the journal bearings supporting the power transmission units 13a and 13b and that is closest to the distance sensor in an axial direction (hereinafter, also referred to simply as an axial direction) parallel to the rotation axis C in the power transmission units 13a and 13b (the same applies hereinafter).

Each time the measurement data are newly generated by the data generation unit 24 and stored in the storage unit 25, the replacement time prediction unit 26 may newly predict a replacement time of the journal bearing 5p, 5q, 5r, or 5s corresponding to the measurement data (that is, the distance sensor 21p, 21q, 21r, or 21s that outputs the above-described measurement value for evaluation in the measurement data). In this case, the replacement time prediction unit 26 may newly predict the replacement time of the journal bearing, based on a plurality of pieces of the measurement data corresponding to the journal bearing, which are stored in the storage unit 25 until this new prediction time.

The replacement time prediction unit 26 may predict, as a replacement time of the corresponding journal bearing, a time at which a wear amount of each of the journal bearings 5p, 5q, 5r, and 5s will reach a set amount. Here, the wear amount may be a difference between the measurement value for evaluation and a set initial value. The set initial value may be a measurement value obtained at the start of use of the corresponding journal bearing 5p, 5q, 5r, or 5s. For example, the replacement time prediction unit 26 may predict a measurement value for evaluation (or a wear amount of the j ournal bearing) at each future point of time by using, for example, an extrapolation method or another method, based on a plurality of sets of points of time and measurement values for evaluation that are associated with each other in a plurality of pieces of the measurement data corresponding to the journal bearing, and may predict a replacement time of the journal bearing, based on the predicted measurement value for evaluation (or the wear amount) at each future point of time.

The notification unit 27 notifies a person or a terminal device of the replacement time (or the replacement time and the wear amount) of each of the journal bearings 5p, 5q, 5r, and 5s which is predicted by the replacement time prediction unit 26. In a case where the notification is given to a person, the notification unit 27 may be a display that gives the notification to the person by displaying the replacement time (or the replacement time and the wear amount). In a case where the notification is given to the terminal device, the notification unit 27 gives the notification to the terminal device by transmitting the replacement time (or the replacement time and the wear amount) to the terminal device via wireless communication or wired communication. In this case, the terminal device may display the received replacement time (or the replacement time and the wear amount) on a display thereof.

For each of the journal bearing 5p, 5q, 5r, and 5s, the notification unit 27 may notify the person or the terminal device of the replacement time of the journal bearing. In addition, each time a replacement time is newly predicted by the replacement time prediction unit 26, the notification unit 27 may notify the person or the terminal device of the new replacement time.

### (Effects of Present Embodiment)

The distance sensors 21p to 21s are attached to the casing 4 provided with the journal bearings 5p to 5s that support the power transmission units 13a and 13b, and the distance sensors 21p to 21s each measure the distances to the outer peripheral surface of the power transmission unit 13a or 13b. Therefore, the wear amount of the journal bearings 5p to 5s can be confirmed from this measurement value. In addition, since this measurement is performed on the power transmission units 13a and 13b in a non-contact manner by the distance sensors 21p to 21s, work or an operation of moving the gauge rod of the wear down gauge and bringing a distal end of the gauge rod into contact with the outer peripheral surface of the power transmission unit as in the related art is not necessary.

In addition, in Patent Literature 1, a plug structure is provided for preventing oil leakage while allowing the gauge rod to move, but in the present embodiment, the movement of the gauge rod of the wear down gauge is not required during the measurement. Therefore, a structure for preventing oil leakage while allowing the gauge rod to move is not necessary.

Since the distance sensors 21p to 21s are eddy current type displacement sensors that each measure a distance by using a change in a magnetic field, the distance sensors 21p to 21s can each measure the distance without being affected by the lubricating oil. In other words, the lubricating oil (e.g., droplets of the lubricating oil) for the journal bearings 5p to 5s is present between the distal end of the sensor heads 31 and the outer peripheral surfaces of the power transmission units 13a and 13b. The distance sensors 21p to 21s can each measure the distance to the outer peripheral surface with high accuracy without being affected by the lubricating oil.

In the journal bearings 5p to 5s (sliding bearings), the power transmission units 13a and 13b float with respect to the journal bearings 5p to 5s by the thickness of an oil film of the lubricating oil. The thickness of the oil film depends on the rotation speeds of the power transmission units 13a and 13b. Therefore, the measurement value acquisition units 23a and 23b output the target distances concerning the power transmission units 13a and 13b which are measured by the distance sensors 21p to 21s as the measurement values for evaluation, based on the rotation speeds detected by the rotation speed sensors 22a and 22b, in a state where the rotation speed of the power transmission units 13a and 13b is the set speed for measurement. Therefore, since the change in the thickness of the oil film due to a difference in the rotation speed can be suppressed, a variation in the measurement value of the target distance can be reduced.

Note that the above-described set speed may mean a predetermined speed range in which such an effect is obtained (however, the above-described set speed may mean one value).

In the present embodiment, each of the measurement value acquisition units 23a and 23b repeatedly outputs the above-described measurement value for evaluation at intervals (e.g., each time the set period elapses). Each time the measurement value acquisition unit 23a or 23b outputs the measurement value for evaluation, the data generation unit 24 generates measurement data in which the measurement value for evaluation and the point of time when the measurement value for evaluation is measured are associated with each other, and stores the measurement data in the storage unit 25. The replacement time prediction unit 26 predicts a future replacement time (e.g., a day or a month) of each of the journal bearing 5p, 5q, 5r, and 5s, based on respective pieces of the measurement data stored in the storage unit 25. The notification unit 27 gives a notification of the predicted replacement time. Therefore, it is easy to replace each of the journal bearings 5p, 5q, 5r, and 5s at an appropriate time. As a result, for example, the journal bearings 5p to 5s can be each used until an end of the full lifespan, and the journal bearings 5p to 5s and other related components can be prevented from being damaged.

In addition, the distance sensors 21q and 21r and the casing 4 are configured such that the distance sensors 21q and 21r are attachable to and detachable from the casing 4. Accordingly, even in a case where the distance sensors 21q and 21r malfunction, the distance sensors 21q and 21r can be replaced without disassembling the casing 4.

The present invention is not limited to the above-described embodiment, and it is apparent that various modifications can be made within the scope of the technical idea of the present invention. In addition, any of the following Modification Examples 1 to 9 may be adopted alone, or two or more of Modification Examples 1 to 9 may be optionally adopted in combination. In this case, points not described below may be the same as those described above.

### (Modification Example 1)

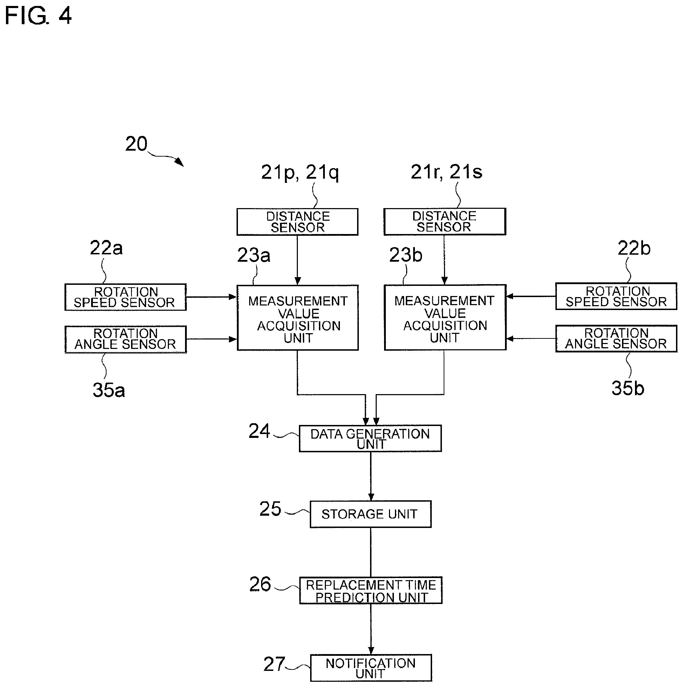

FIG. 4 is a block diagram illustrating a configuration example of a wear inspection device 20 according to Modification Example 1. The wear inspection device 20 according to Modification Example 1 further includes rotation angle sensors 35a and 35b as illustrated in FIG. 4.

The rotation angle sensors 35a and 35b detect rotation angles (rotation phases) of the power transmission units 13a and 13b. In the example in FIG. 4, the rotation angle sensor 35a detects the rotation angle of the power transmission unit (outer shaft output gear 13a) that transmits the rotational driving force to the front propeller 1a, and the rotation angle sensor 35b detects the rotation angle of the power transmission unit (inner shaft output gear 13b) that transmits the rotational driving force to the rear propeller 1b. Note that since known sensors (e.g., a magnetic encoder) can be used as the rotation angle sensors 35a and 35b, detailed description thereof will be omitted.

The measurement value acquisition unit 23a outputs, as a measurement value for evaluation, the target distance concerning the power transmission unit 13a which is measured by each of the distance sensors 21p and 21q at a point of time (hereinafter, also simply referred to as a target point of time) at which the rotation angle (detected rotation angle) detected by the rotation angle sensor 35a is a set rotation angle for measurement, in a state where the rotation speed detected by the rotation speed sensor 22a is the set speed for measurement. Similarly, the measurement value acquisition unit 23b outputs, as a measurement value for evaluation, the target distance concerning the power transmission unit 13b which is measured by each of the distance sensors 21r and 21s at a point of time (hereinafter, also simply referred to as a target point of time) at which the rotation angle (detected rotation angle) detected by the rotation angle sensor 35b is a set rotation angle for measurement, in a state where the rotation speed detected by the rotation speed sensor 22b is the set speed for measurement. The above-described target point of time means a point of time at which a second condition that the detected rotation angle is the set rotation angle is satisfied.

According to the Modification Example 1, the rotation angle sensors 35a and 35b detect the rotation angles of the power transmission units 13a and 13b, and the measurement value acquisition units 23a and 23b output, as the measurement values for evaluation, the target distances concerning the power transmission units 13a and 13b which are measured by the respective distance sensors 21p to 21s at a point of time when the rotation angle detected by the rotation angle sensor 35b is the set rotation angle for measurement. The measurement value acquisition units 23a and 23b output these target distances repeatedly at intervals (e.g., each time the set period elapses). As a result, a distance between the reference point and a constant peripheral-direction position on the outer peripheral surface of each of the power transmission units 13a and 13b is output from each of the measurement value acquisition units 23a and 23b as the measurement value for evaluation. Therefore, a variation in the measurement value for evaluation due to a difference in a peripheral-direction position on the outer peripheral surface of each of the power transmission units 13a and 13b is prevented, and a highly reliable wear amount and a highly reliable replacement time for the journal bearings 5p to 5s can be obtained.

Note that the above-described set rotation angle may mean a predetermined rotation angle range in which such an effect can be obtained (however, the above-described set rotation angle may mean one value).

In Modification Example 1, the rotation speed sensors 22a and 22b may be omitted. In this case, the measurement value acquisition unit 23a outputs, as the measurement value for evaluation, the target distance concerning the power transmission unit 13a which is measured by each of the distance sensors 21p and 21q at a point of time when the rotation angle detected by the rotation angle sensor 35a is the set rotation angle for measurement. Similarly, the measurement value acquisition unit 23b outputs, as the measurement value for evaluation, the target distance concerning the power transmission unit 13b which is measured by each of the distance sensors 21r and 21s at a point of time when the rotation angle detected by the rotation angle sensor 35b is the set rotation angle for measurement.

### (Modification Example 2)

In the above-described embodiment or Modification Example 1, the measurement value acquisition units 23a and 23b may each output the measurement value for evaluation to the notification unit 27 in addition to outputting the measurement value for evaluation to the data generation unit 24, or instead of outputting the measurement value for evaluation to the data generation unit 24. In this case, the notification unit 27 notifies a person or a terminal device of the measurement value for evaluation which is received from each of the measurement value acquisition units 23a and 23b. In a case of giving a notification to the person, the notification unit 27 may be a display that displays the measurement value for evaluation to give the notification to the person. In a case of giving a notification to the terminal device, the notification unit 27 gives the notification to the terminal device by transmitting the measurement value for evaluation to the terminal device via wireless communication or wired communication. In this case, the terminal device may display the received measurement value for evaluation on a display thereof. As a result, a wear amount can be known from the displayed measurement value for evaluation.

In the present Modification Example 2, in a case where each of the measurement value acquisition units 23a and 23b also outputs the measurement value for evaluation to the data generation unit 24, the data generation unit 24, the storage unit 25, the replacement time prediction unit 26, and the notification unit 27 in the above-described embodiment may function as described above. Alternatively, in the present Modification Example 2, the data generation unit 24, the storage unit 25, and the replacement time prediction unit 26 may be omitted.

### (Modification Example 3)

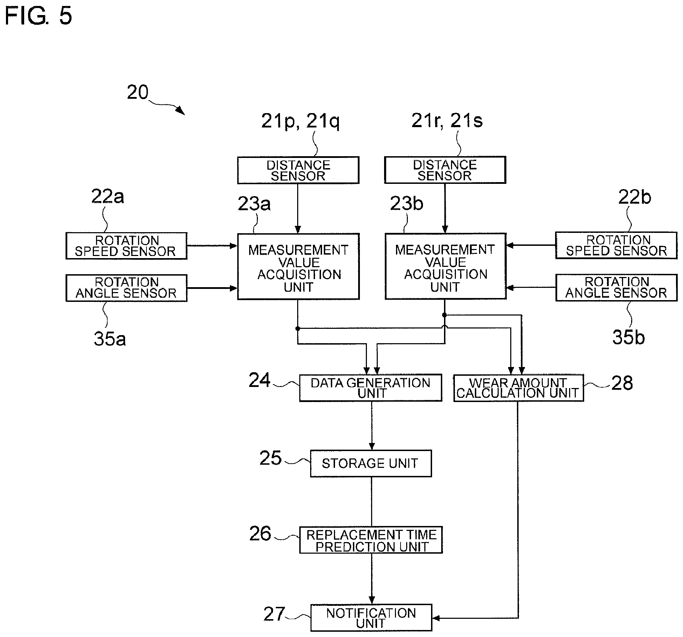

FIG. 5 is a block diagram illustrating a configuration example of a wear inspection device 20 according to Modification Example 3. As illustrated in FIG. 5, the wear inspection device 20 may further include a wear amount calculation unit 28 in addition to the configuration of the above-described embodiment, Modification Example 1, or Modification Example 2. For each of the distance sensors 21p, 21q, 21r, and 21s, the wear amount calculation unit 28 calculates, based on the measurement value for evaluation and the set initial value, a wear amount of the journal bearing 5p, 5q, 5r, or 5s corresponding to the distance sensor 21p, 21q, 21r, or 21s each time the measurement value from the distance sensor is output as the measurement value for evaluation by the measurement value acquisition unit 23a or 23b. The set initial value may be a measurement value obtained through measurement by the distance sensor at the start of use of the journal bearing. In addition, the wear amount calculated here may be a difference between the measurement value for evaluation and the set initial value.

The wear amount calculation unit 28 outputs the calculated wear amount to the notification unit 27. For example, for each of the distance sensors 21p, 21q, 21r, and 21s, that is, for each of the corresponding journal bearings 5p, 5q, 5r, and 5s, the wear amount calculation unit 28 outputs, to the notification unit 27, wear amount data in which identification information of the journal bearing and the calculated wear amount are associated with each other. The notification unit 27 notifies a person or a terminal device of the wear amount (e.g., the wear amount data) received from the wear amount calculation unit 28. In a case of giving a notification to the person, the notification unit 27 may be a display that gives the notification to the person by displaying the wear amount (e.g., the wear amount data). In a case of giving the notification to the terminal device, the notification unit 27 gives the notification to the terminal device by transmitting the wear amount (e.g., the wear amount data) to the terminal device via wireless communication or wired communication. In this case, the terminal device may display the received wear amount (e.g., the wear amount data) on a display thereof.

With the Modification Example 3, it is possible to know the wear amount of the journal bearing without performing the work or operation of moving the gauge rod of the wear down gauge and bringing the distal end of the gauge rod into contact with the outer peripheral surface of the power transmission unit.

In Modification Example 3, the rotation speed sensors 22a and 22b or the rotation angle sensors 35a and 35b may be omitted, or the rotation speed sensors 22a and 22b and the rotation angle sensors 35a and 35b may be omitted. In a case where both the rotation speed sensors 22a and 22b and the rotation angle sensors 35a and 35b are omitted, the measurement value acquisition units 23a and 23b may be omitted. In this case, for each of the distance sensors 21p, 21q, 21r, and 21s, the wear amount calculation unit 28 may calculate the wear amount of the journal bearing 5p, 5q, 5r, or 5s corresponding to the distance sensor, based on the measurement value from the distance sensor and the set initial value. In this case, the wear amount calculation unit 28 outputs the calculated wear amount to the notification unit 27 as in the above-described case. For example, for each of journal bearing 5p, 5q, 5r, and 5s, the wear amount calculation unit 28 outputs, to the notification unit 27, the wear amount data in which the identification information of the journal bearing and the calculated wear amount are associated with each other. The operation of the notification unit 27 in this case is the same as described above. In addition, in this case, the distance sensors 21p to 21s and the wear amount calculation unit 28 may automatically start and execute the above-described operation each time a set period (e.g., one day, one week, or one month) elapses, or the above-described operation may be started and executed by a person operating an appropriate operation unit.

Note that in the Modification Example 3, the data generation unit 24, the storage unit 25, and the replacement time prediction unit 26 described above may be omitted or may be provided.

### (Modification Example 4)

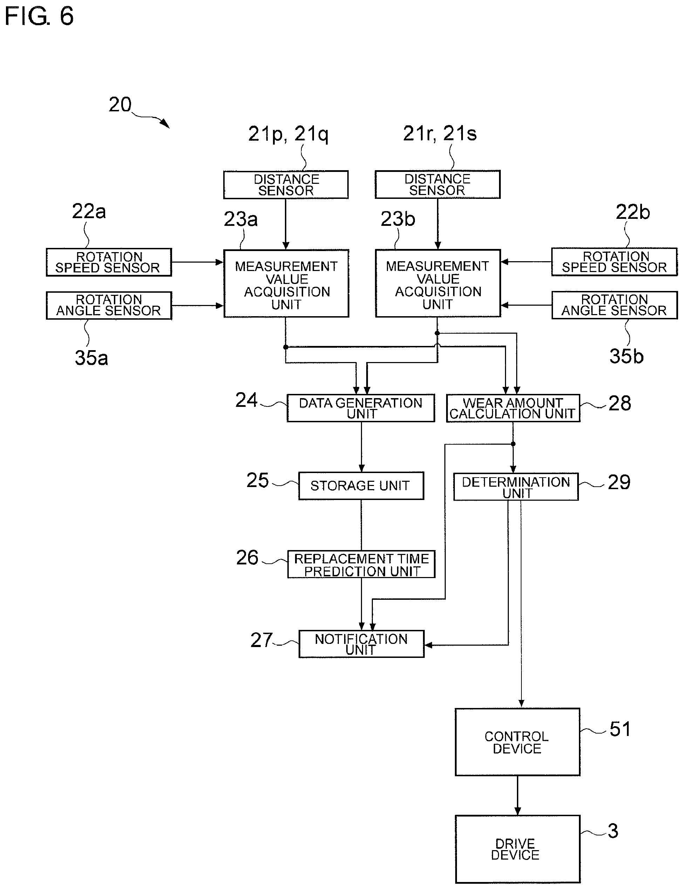

A wear inspection device 20 according to Modification Example 4 may further include a determination unit 29 and a control device 51 in addition to the configuration of the above-described embodiment or any of the above-described Modification Examples 1 to 3. FIG. 6 illustrates a configuration example of the wear inspection device 20 according to Modification Example 4, and illustrates a case where the wear amount calculation unit 28, a determination unit 29, and a control device 51 are further provided in addition to the configuration of Modification Example 2.

The wear inspection device 20 according to Modification Example 4 also includes the wear amount calculation unit 28. In the present Modification Example 4, the function of the wear amount calculation unit 28 is the same as that in the above Modification Example 3. However, the wear amount calculation unit 28 outputs the calculated wear amount to the determination unit 29.

For each of the distance sensors 21p, 21q, 21r, and 21s (that is, for each of the corresponding journal bearings 5p, 5q, 5r, and 5s), the determination unit 29 determines whether or not the wear amount received from the wear amount calculation unit 28 exceeds a threshold value. As a result, in a case where the wear amount exceeds the threshold value, the notification unit 27 gives a notification of the excess. For example, the notification unit 27 may perform the notification by causing a predetermined light source to emit light, or may perform the notification by causing a speaker to generate a predetermined sound. Alternatively, the notification unit 27 may perform the notification using warning data.

In a case of the notification with the warning data, the determination unit 29 generates the warning data indicating that the wear amount of the journal bearings 5p, 5q, 5r, or 5s exceeds the threshold value, and outputs the warning data to the notification unit 27. The warning data may be data including identification information of the journal bearing.

The notification unit 27 notifies a person or a terminal device of the warning data received from the determination unit 29. In a case of giving the notification to the person, the notification unit 27 may be a display that displays the warning data to give the notification to the person. In a case of giving the notification to the terminal device, the notification unit 27 gives the notification to the terminal device by transmitting the warning data to the terminal device via wireless communication or wired communication. In this case, the terminal device may display the received warning data on a display thereof.

As described above, the notification unit 27 notifies that the wear amount exceeds the threshold value. Thereby, it is possible to know that the journal bearing should be replaced or time for replacing the journal bearing is approaching without performing the work or operation of moving the gauge rod of the wear down gauge and bringing the distal end thereof into contact with the outer peripheral surface of the power transmission unit.

In addition, the determination unit 29 determines whether or not the wear amount received from the wear amount calculation unit 28 exceeds an allowable value, for each of the distance sensors 21p, 21q, 21r, and 21s (that is, for each of the corresponding journal bearings 5p, 5q, 5r, and 5s). As a result, in a case where the wear amount exceeds the allowable value, the determination unit 29 outputs, to the control device 51, a signal indicating the excess. Accordingly, the control device 51 controls the drive device 3 of the propulsion propeller (e.g., by decreasing a rotation speed of the corresponding propulsion propeller 1a or 1b) such that a rotation speed of the corresponding propulsion propeller 1a or 1b becomes equal to or lower than a set rotation speed.

In this case, the control device 51 may control the drive device 3 (the first drive source 3a or the second drive source 3b) of the propulsion propeller such that the rotation speed of the propulsion propeller 1a or 1b corresponding to the wear amount becomes equal to or lower than the set rotation speed, or may control the drive device 3 (the first drive source 3a and the second drive source 3b) of the propulsion propeller such that the rotation speeds of both the propulsion propeller 1a and the propulsion propeller 1b become equal to or lower than the set rotation speed.

The allowable value is larger than the above-described threshold value. For example, the threshold value may be 0.2 mm and the allowable value may be 0.3 mm, but the threshold value and the allowable value are not limited to these values.

As described above, in a case where the wear amount of the journal bearing 5p, 5q, 5r, or 5s exceeds the allowable value, the damage to the propulsion propellers 1a or 1b and the related components can be suppressed by setting the rotation speed of the propulsion propeller 1a or 1b to become equal to or lower than the set rotation speed.

In Modification Example 4, only one of the above-described threshold value and allowable value may be used.

In a case where only the threshold value out of the above-described threshold value and allowable value is used, the processing that uses the allowable value is not performed and the configuration of performing this processing is omitted. In a case where only the allowable value out of the above-described threshold value and allowable value is used, the processing that uses the threshold value is not performed and the configuration of performing this processing is omitted.

### (Modification Example 5)

In the above description, the propeller device 10 to which the wear inspection device 20 is applied is the contra-rotating propeller device including the two propellers 1a and 1b, but the propeller device may include one propeller. In this case, in the above description, the front propeller 1a and the outer shaft 2a are each replaced with a propeller and a propeller shaft (a shaft to which the propeller is coupled), the propeller shaft is driven by an appropriate drive source to rotate, and the power transmission unit 13a may be the propeller shaft or a member that is coupled to the propeller shaft. In addition, in this case, the inner shaft 2b and each part (the power transmission unit 13b, the journal bearings 7r and 7s, the distance sensors 21r and 21s, and the like) related to the inner shaft 2b described above may be omitted.

### (Modification Example 6)

In the present invention, the distance sensor may be disposed at a position of measuring a distance between the reference point and the outer peripheral surface of the power transmission unit that transmits the rotational driving force to the propulsion propeller of the ship For example, the distance sensor may be attached to a seal casing (e.g., a seal casing 8 or 9 in FIG. 1) coupled to the stern tube. In this case, the casing provided with the journal bearing to be inspected for a wear amount may be the stern tube that is integrally coupled to the seal casing. In this case, the seal casing and the stern tube constitute the "casing provided with the journal bearing" of the present invention. The "casing provided with the journal bearing" of the present invention may be configured by a plurality of members that are integrally coupled to each other as in this case to surround the power transmission unit, or may be a single member that surrounds the power transmission unit.

### (Modification Example 7)

Each distance sensor may measure the target distance on both sides of the journal bearing in the direction of the rotation axis C (e.g., in FIG. 2, each of the distance sensors 21p and 21q may measure the target distance on both sides of the journal bearing 5q). In this case, as described above, the measurement value that is one of the measurement values for evaluation from the two distance sensors and that changes larger from the corresponding set initial value may be used. For example, in the above-described embodiment, the data generation unit 24 may generate the above-described measurement data of the journal bearing from the measurement value that changes larger from the corresponding set initial value, and the wear amount calculation unit 28 may generate the wear amount data of the journal bearing, based on the measurement value that changes larger from the corresponding set initial value.

### (Modification Example 8)

In the above-described embodiment, the wear inspection device 20 is provided for both the front propeller 1a and the rear propeller 1b, but may be used for performing an inspection for wear of the journal bearing that rotatably supports the power transmission unit that transmits the rotational driving force to one of the front propeller 1a and the rear propeller 1b. For example, the wear inspection device 20 may be used for inspecting wear of one or both of the journal bearings 5p and 5q that rotatably support the power transmission unit 13a for the front propeller 1a. In this case, in the above-described embodiment, the configuration (the distance sensors 21r and 21s, and the like) related to the power transmission unit 13b may be omitted.

### (Modification Example 9)

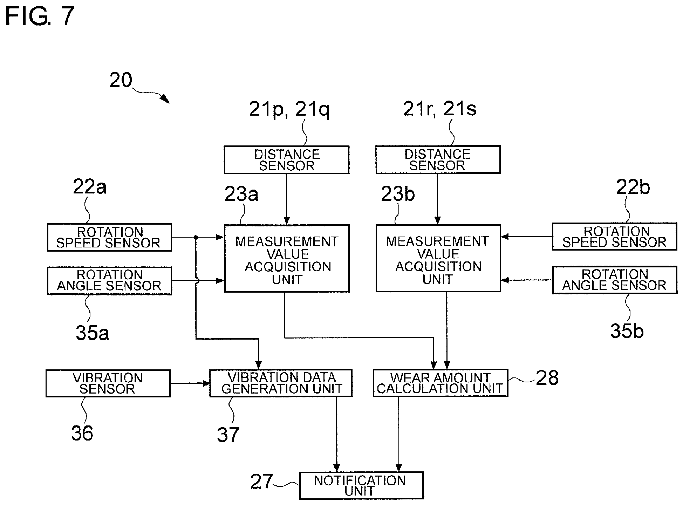

FIG. 7 is a configuration example of a wear inspection device 20 according to Modification Example 9, and illustrates a case where a vibration sensor 36 and a vibration data generation unit 37 are further provided in addition to the configuration of Modification Example 3 described above.

The vibration sensor 36 measures vibration generated by rotation of the power transmission units 13a and 13b. The vibration sensor 36 may be attached to the casing 4 and may measure the vibration of the casing 4 as vibration caused by the rotation of the power transmission units 13a and 13b. In this case, the vibration sensor 36 may be, for example, an acceleration sensor that measures acceleration of the casing 4 as the vibration, but the present invention is not limited thereto.

A rotation speed detected by the rotation speed sensor 22a is input to the vibration data generation unit 37. As a result, the vibration data generation unit 37 generates vibration data from the vibration measured by the vibration sensor 36 at each point of time, in a state where the rotation speed detected by the rotation speed sensor 22a is the set speed for measurement. The vibration data may be, for example, data representing vibration (e.g., acceleration) at each point of time. In other words, the vibration data may be vibration waveform data representing vibration with respect to time. Alternatively, the vibration data may be spectral data that represent the magnitude (frequency component) of the vibration at each frequency in the vibration waveform data. In other words, the vibration data may be obtained by converting the above-described vibration waveform data into the spectral data representing the magnitude of vibration with respect to the frequency.

Note that the vibration data generation unit 37 may be configured to activate the vibration sensor 36 to generate the vibration data as described above, when the measurement value acquisition units 23a and 23b start the evaluation measurement value acquisition processing described above.

The vibration data generation unit 37 outputs the vibration data generated as described above to the notification unit 27. The notification unit 27 notifies a person or a terminal device of the vibration data received from the vibration data generation unit 37 and the above-described wear amount data received from the wear amount calculation unit 28. In a case of giving the notification to the person, the notification unit 27 may be a display that gives the notification to the person by displaying the vibration data and the wear amount data. In a case of giving the notification to the terminal device, the notification unit 27 gives the notification to the terminal device by transmitting the vibration data and the wear amount data to the terminal device via wireless communication or wired communication. In this case, the terminal device may display the received vibration data and wear amount data on a display thereof.

The vibration data and the wear amount data that are given in the notification (displayed) in this way are data obtained at the same set rotation speed described above. Therefore, the evaluation related to the vibration and the evaluation related to wear can be performed based on the vibration data and the wear amount data obtained at the same set rotation speed.

### Description of Reference Numerals

1a: front propeller
1b: rear propeller
2a: outer shaft
2b: inner shaft
3: drive device
3a: first drive source
3b: second drive source
4: casing
4a: outer casing portion
4b: inner casing portion
4c, 4d, 4e: through-hole
5p, 5q, 5r, 5s: journal bearing
6: hull
7: stern tube
8, 9: seal casing
10: propeller device
11, 12: gear
13a: outer shaft output gear 13a (power transmission unit)
13b: inner shaft output gear 13b (power transmission unit)
14: gear coupling
15, 16: gear
18: sleeve-shaft joint
19: engine room
20: wear inspection device
21p, 21q, 21r, 21s: distance sensor
22a, 22b: rotation speed sensor
23a, 23b: measurement value acquisition unit
24: data generation unit
25: storage unit
26: replacement time prediction unit
27: notification unit
28: wear amount calculation unit
29: determination unit
31: sensor head
31a: coil
32: measurement unit
33: electric wire (cable)
34: tube-shaped member
35a, 35b: rotation angle sensor
36: vibration sensor
37: vibration data generation unit
51: control device
C: rotation axis

## Claims

1. A wear inspection device that is provided in a ship including a propulsion propeller, a power transmission unit configured to transmit a rotational driving force to the propulsion propeller, and a journal bearing configured to rotatably support the power transmission unit, the wear inspection device being for performing inspection concerning wear of the journal bearing, the wear inspection device comprising:
a casing that surrounds the power transmission unit and is provided with the journal bearing; and
a distance sensor that is attached to the casing and configured to measure, in a non-contact manner, a distance as a target distance from a reference point to an outer peripheral surface of the power transmission unit in a radial direction of the power transmission unit.

2. The wear inspection device according to claim 1,
wherein the distance sensor is an eddy current type displacement sensor including a sensor head attached to the casing to face the outer peripheral surface in the radial direction, a coil provided in the sensor head, and a measurement unit configured to supply an alternating current to the coil and measure the target distance, based on impedance or a voltage of the coil, and
lubricating oil for the journal bearing is present between the sensor head and the outer peripheral surface, inside the casing.

3. The wear inspection device according to claim 1,
wherein the distance sensor and the casing are configured such that the distance sensor is detachably attached to the casing.

4. The wear inspection device according to claim 1, further comprising:
a measurement value acquisition unit configured to output the target distance measured by the distance sensor as a measurement value for evaluation, based on one or both of a detected rotation speed and a detected rotation angle of the power transmission unit, when one or both of a first condition that a detected rotation speed is one set speed or within a predetermined speed range and a second condition that a detected rotation angle is one set rotation angle or within a predetermined rotation angle range are satisfied,.

5. The wear inspection device according to claim 4,
wherein the measurement value acquisition unit is configured to output the target distance measured by the distance sensor as the measurement value for evaluation when one or both of the first condition and the second condition are satisfied, each time the measurement value acquisition unit receives a measurement command or each time a set period elapses, and
the wear inspection device further comprises:
a data generation unit configured to generate measurement data in which the measurement value for evaluation and a point of time when the measurement value for evaluation is measured are associated with each other, each time the measurement value for evaluation is output from the measurement value acquisition unit;
a storage unit configured to store the generated measurement data;
a replacement time prediction unit configured to predict a replacement time of the journal bearing, based on a plurality of pieces of the measurement data stored in the storage unit; and
a notification unit configured to make a notification of the predicted replacement time.

6. The wear inspection device according to any one of claims 1 to 4, further comprising:
a wear amount calculation unit configured to calculate a wear amount of the journal bearing, based on the target distance and a set initial value; and
a notification unit configured to make a notification of the wear amount.

7. The wear inspection device according to claim 4, further comprising:
a wear amount calculation unit configured to calculate a wear amount of the journal bearing, based on the measurement value for evaluation output from the measurement value acquisition unit and a set initial value; and
a notification unit configured to determine whether or not the calculated wear amount exceeds a threshold value and make a notification of an excess of the wear amount when the wear amount exceeds the threshold value.

8. The wear inspection device according to claim 4, further comprising:
a wear amount calculation unit configured to calculate a wear amount of the journal bearing, based on the measurement value for evaluation output from the measurement value acquisition unit and a set initial value;
a determination unit configured to determine whether or not the calculated wear amount exceeds an allowable value; and
a control device configured to control a drive device of the propulsion propeller to make a rotation speed of the propulsion propeller equal to or lower than a set rotation speed, when the determination unit determines that the wear amount exceeds the allowable value.

9. A ship comprising:
the wear inspection device according to any one of claims 1 to 5, and 7.

10. The ship according to claim 9, further comprising:
a propeller device including front and rear propellers and configured to drive the front and rear propellers to rotate in opposite directions,
wherein the wear inspection device is provided in at least one of the front and rear propellers, the wear inspection device being for performing inspection concerning wear of the journal bearing configured to rotatably support the power transmission unit that transmits a rotational driving force to the propulsion propeller that is the at least one of the front and rear propellers.
